# EUROPEAN PATENT APPLICATION

(11) **EP 2 876 256 A1**
(43) Date of publication of application: **27.05.2015**
(21) Application number: 13306614.2
(22) Date of filing: 26.11.2013
(51) Int. Cl.: E21B 47/16, H04B 11/00, H04W 40/12

(54) **Communication path verification for downhole networks**

(71) Applicant: Services Pétroliers Schlumberger, 75007 Paris (FR); SCHLUMBERGER TECHNOLOGY B.V., 2514 JG Den Haag (NL); Schlumberger Holdings Limited, 1110 Tortola (VG)
(72) Inventor: Merino, Carlos, 92142 Clamart CEDEX (FR)
(74) Representative: Ford, Michael Frederick

(57) **Abstract**

A modem is described having an acoustic transceiver assembly, transceiver electronics including transmitter and receiver electronics coupled to the transceiver assembly, at least one processing unit coupled to the transceiver electronics, a non-transitory processor readable medium coupled to the at least one processing unit, and a power supply supplying power to the transceiver assembly and the transceiver electronics. The non-transitory processor readable medium stores unique identifiers, a set of communications parameters, and processor executable instructions which enables the receiver electronics to receive a first communications message; enables the transmitter electronics to transmit a test message with the set of communications parameters to a predetermined modem; enables the receiver electronics to receive an acknowledgement message with the set of communications parameters from the predetermined modem; and enables the transmitter electronics to transmit a second communications.

## Description

### BACKGROUND

This disclosure relates to downhole tools, and more particularly to methods and apparatuses for downhole communication between tools.

### Description of the Related Art

One of the problems associated with any borehole is to communicate measured data between one or more locations down a borehole and the surface, or between downhole locations themselves. For example, in the oil and gas industry it is desirable to communicate data generated downhole to the surface during operations such as drilling, perforating, fracturing, and drill stem or well testing; and during production operations such as reservoir evaluation testing, pressure and temperature monitoring. Communication is also desired to transmit intelligence from the surface to downhole tools, equipment, or instruments to effect, control or modify operations or parameters.

Accurate and reliable downhole communication may be desired when complex data comprising a set of measurements or instructions is to be communicated, i.e., when more than a single measurement or a simple trigger signal has to be communicated. For the transmission of complex data it is often desirable to communicate encoded digital signals.

Wireless communication systems have been developed for purposes of communicating data between a downhole tool and the surface of the well. These techniques include, for example, communicating commands downhole via (1) electromagnetic waves; (2) pressure or fluid pulses; and (3) acoustic communication. Conventional sonic sources and sensors used in downhole tools are described in U.S. Pat. Nos. 6,466,513, 5,852,587, 5,886,303, 5,796,677, 5,469,736, 6,084,826, 6,466,513, 7,339,494, and 7,460,435.

Conventional wireless communication systems, not designed for work within the downhole environment, operate with a data transmission rate at between about 2.4 kbps - 1,000 Mbps. Often, these conventional wireless communication systems are not designed for reliable communication or operation in harsh environments. For example, conventional wireless communication systems are often constructed using housing and electronic circuitry arrangements which are susceptible to damage due to shock, loads, temperatures above 50-60° C, pressures, environmental noise, and chemical exposure.

A possible solution to establish communication between a surface modem and the downhole modems is to previously discover a suitable communication path and use the knowledge acquired during communication path discovery to make a more efficient communication in terms of round trip time (RTT), bandwidth, and energy, as described in U.S. 2012/0249338.

In some downhole communications, communications channels, used by surface modems and downhole modems to communicate, may change rapidly or become unstable due to noise, interference, or instances where a modem ceases to communicate. In these situations, knowledge acquired during the discovery phase may not be reused or may no longer be valid. Therefore it may be beneficial to have a modem and a technique to enable communication in an unstable downhole communications network.

### SUMMARY

In one aspect, embodiments of the present disclosure are directed to a modem for communication in a network of acoustic modems via a drill string. The modem is described as having an acoustic transceiver assembly, transceiver electronics coupled to the transceiver assembly, at least one processing unit coupled to the transceiver electronics, a non-transitory processor readable medium coupled to the at least one processing unit, and a power supply supplying power to the transceiver assembly, the at least one processing unit, and the non-transitory processor readable medium. The transceiver electronics have transmitter electronics coupled to the acoustic transceiver assembly which cause the acoustic transceiver assembly to send acoustic signals into the drill string and receiver electronics coupled to the acoustic transceiver assembly which decode acoustic signals received by the acoustic transceiver assembly. The at least one processing unit executes processor executable instructions. The non-transitory processor readable medium stores a first unique identifier, a set of communications parameters to transmit and receive signals, and processor executable instructions. The processor executable instructions (1) enable the receiver electronics to receive a first communications message, (2) enable the transmitter electronics to transmit a test message with the set of communications parameters to a predetermined modem, (3) enable the receiver electronics to receive an acknowledgement message with the set of communications parameters from the predetermined modem, and (4) enable the transmitter electronics to transmit a second communications message responsive to receiving the acknowledgement message.

In another aspect, embodiments described in the present disclosure are directed to a method performed by receiving, by an acoustic modem, a first communications message including. The acoustic modem further transmits a test message with a set of communications parameters to a predetermined acoustic modem and receives an acknowledgement message with a set of communications parameters from the predetermined acoustic modem. The acoustic modem then transmits a second communications message having. In some described embodiments, the set of communications parameters is a first set of communications parameters of a plurality of sets of communications parameters. If the acknowledgement message is not received within a predetermined time period, the acoustic modem further transmits subsequent test messages with a series of distinct communication parameters selected from the plurality of sets of communications parameters until the acoustic modem receives the acknowledgement message with a second set of communications parameters used to transmit the test message to which the acknowledgement message is responding.

In another aspect, the present disclosure describes a communications network having a drill string and a plurality of acoustic modems coupled to the drill string which transmits signals along the drill string. The plurality of acoustic modems include a first acoustic modem transmitting a first communications message via the drill string; a second acoustic modem receiving the first communications message, transmitting a test message with a first set of communications parameters, receiving an acknowledgement message with the set of communications parameters, and transmitting a second communications message; and a third acoustic modem receiving the test message, transmitting the acknowledgement message, and receiving the second communications message. The first communications message includes a first unique identifier, a second unique identifier, and a payload. The second communications message has the second unique identifier and the payload

### BRIEF DESCRIPTION OF THE DRAWINGS

Certain embodiments of the inventive concepts will hereafter be described with reference to the accompanying drawings, wherein like reference numerals denote like elements. It should be understood, however, that the accompanying figures illustrate the various implementations described herein and are not meant to limit the scope of the various technologies described herein.
Figure 1 shows a schematic view of a downhole telemetry system in accordance with the present disclosure.
Figure 2 is a partial block diagram of a wireless modem constructed in accordance with the present disclosure.
Figures 3 is a diagrammatic representation of one embodiment of a method for communication path verification in a downhole telemetry system in accordance with the present disclosure.
Figures 4 is a schematic view of the method for communication path verification of Figure 3.
Figures 5 is a diagrammatic representation of another embodiment of a method for communication path verification in a downhole telemetry system in accordance with the present disclosure.
Figure 6 is a schematic view of the method for communication path verification of Figure 5.
Figure 7 is a diagrammatic representation of a communication network in accordance with the present disclosure.

### DETAILED DESCRIPTION

Specific embodiments of the inventive concepts disclosed herein will now be described in detail with reference to the accompanying drawings. Further, in the following detailed description of embodiments of the present disclosure, numerous specific details are set forth in order to provide a more thorough understanding of the disclosure. However, it will be apparent to one of ordinary skill in the art that the embodiments disclosed herein may be practiced without these specific details. In other instances, well-known features have not been described in detail to avoid unnecessarily complicating the description.

Unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the inventive concept. This description should be read to include one or at least one and the singular also includes the plural unless otherwise stated.

The terminology and phraseology used herein is for descriptive purposes and should not be construed as limiting in scope. Language such as "including," "comprising," "having," "containing," or "involving," and variations thereof, is intended to be broad and encompass the subject matter listed thereafter, equivalents, and additional subject matter not recited or inherently present therein.

As used herein any references to "one embodiment" or "an embodiment" means that a particular element, feature, structure, or characteristic described in connection with the embodiment is included in at least one embodiment. The appearances of the phrase "in one embodiment" in various places in the specification may not refer to the same embodiment.

Furthermore, while particularly described with reference to transmitting data between a location downhole and the surface during testing installations, aspects of the disclosure are not so limited. For example, some implementations of the disclosure are applicable to transmission of data from the surface during drilling, in particular measurements while drilling (MWD) and sand control. Additionally, some aspects of the disclosure are applicable throughout the life of a wellbore including, but not limited to, during drilling, logging, drill stem testing, fracturing, stimulation, completion, cementing, and production.

The present disclosure relates in general to telemetry systems for use with installations in oil and gas wells or the like. More particularly, the present disclosure relates to a method and system for a wireless modem to communicate with other wireless modems for transmitting and receiving data and control signals between a location down a borehole and the surface, or between wireless modems at various downhole locations verifying each time the reliability of a communication path extending between the communicating modems.

Wireless communication system technology that is not designed to work within a downhole environment may not function properly in a downhole environment due to the harsh environment. For example, in a downhole environment temperatures may exceed 160° C. Further, downhole environments include increased pressures, shear forces, impact forces, oxidizing reactions, and other aspects which may be too deleterious for reliable operation of conventional wireless communication systems, as noted above.

Further, the wireless communication systems developed for the downhole environment operate at baud rates which are often slower than many conventional wireless communication systems. The baud rates are influenced by communication type, such as acoustic communication, and by downhole factors such as noise, distance between wireless communication systems, signal attenuation, channel characteristics, impact forces, and other factors specific to downhole environments. With baud rates much less than that of conventional wireless communication systems, wireless communication systems for downhole environments employ more efficient communications methods than are often used with conventional wireless communication systems used on the surface.

Modems deployed down a borehole, may be subjected to impact stress, shear stress, temperatures in excess of 160° C. Modems, in accordance with the present disclosure may include construction materials of stainless steel, plastic, or other suitable materials to better resist temperature, pressure, and other deleterious reactions related to a downhole environment. Electronics within the modem may be configured as multi-chip modules, for example, using one or more dies which may function at high temperatures and be housed in materials such as stainless steel, plastics, or other inert material to resist temperature, pressure, and other deleterious aspects related to the downhole environment. In some embodiments, housings used in the modems may be sealed, purged of air, and filled with inert gas such as argon, nitrogen, or any other suitable gas to prevent oxidation and other reactions associated with downhole temperatures, pressures, and substances. In some embodiments, separate atmospheric chambers may be created within the housing to isolate disparate components of the modem. Further, in some embodiments, modems, configured in accordance with the present disclosure, may employ differing modes of telemetry including electromagnetic and acoustic wave propagations, wired local communications, and other suitable telemetry modes.

The present disclosure is, in part, directed to a series of modems deployed along a drill string in a communications network. Each of the series of modems may be provided with information such as unique identifiers for each of the series of modems, the position of the modem and the relative position of the other modems of the series of modems, and a plurality of sets of communications parameters used to perform communication between the series of modems. Prior to communicating, a modem of the series of modems may transmit a test message, to a predetermined modem, and receive an acknowledgement message acknowledging receipt of the test message by another modem of the series of modems. The test and acknowledgement messages verify the operation of a communication path between the communicating modems. In the event of noise, distortion, or interruption, where the modem fails to receive the acknowledgement message, the modem may transmit subsequent test messages using differing sets of communications parameters, frequency and bit rate combinations, as well as differing modulation and code, until receiving the acknowledgement signal using one of the sets of communications parameters. In some instances, where the modem exhausts the sets of communications parameters prior to receiving the acknowledgement message, the modem may attempt communication in a similar fashion with a different modem of the series of modems in order to re-establish at least a portion of the communications network.

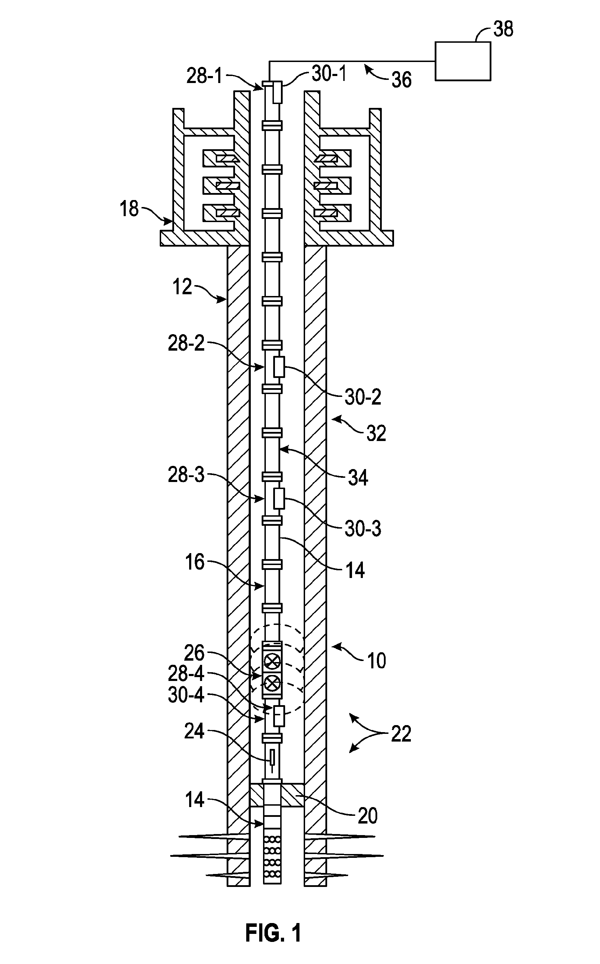

In particular, in one embodiment, the present disclosure is applicable to testing installations such as are used in oil and gas wells or the like. Figure 1 shows a schematic view of such an installation, including a well 10. Once the well 10 has been drilled, the drilling apparatus is removed from the well 10 and tests may be performed to determine the properties of a formation through which the well 10 has been drilled. In the example of Figure 1, the well 10 has been drilled, and lined with a steel casing 12 (cased hole) in the conventional manner, although similar systems can be used in unlined (open hole) environments. In order to test the formations, one or more testing apparatus may be placed in the well 10 close to one or more regions to be tested, in this case the formation. Placing the one or more testing apparatus proximate to one of the regions to be tested enables isolation of sections or intervals of the well 10, and enables conveyance of fluids from regions of interest to a surface; certain of the regions of interest may be the region to be tested. Conveying fluids to the surface may be performed using an elastic media 14, such as a drill pipe 16. The drill pipe 16 may be a jointed tubular drill pipe, which extends from the well head equipment 18 at the surface (or sea bed in subsea environments) down inside the well 10 to the region of interest. Although the elastic media 14 will be described herein with respect to the drill pipe 16, it should be understood that the elastic media 14 can take other forms in accordance with the present disclosure, such as production tubing, a drill string, a tubular casing, or the like. The well head equipment 18 can include blow-out preventers and connections for fluid, power and data communication.

A packer 20 may be positioned on the drill pipe 16 and can be actuated to seal the borehole around the drill pipe 16 at the region of interest. Various pieces of downhole equipment 22 for testing and the like are connected to the drill pipe 16, either above or below the packer 20, such as a sampler 24, or a tester valve 26. The downhole equipment 22 may also be referred to herein as a "downhole tool." Other examples of downhole equipment 22 may include: further packers, circulation valves, downhole chokes, firing heads, TCP (tubing conveyed perforator) gun drop subs, pressure gauges, downhole flow meters, downhole fluid analysers, and the like.

As shown in Figure 1, the sampler 24 and the tester valve 26 are located above the packer 20. In order to support signal transmission along the drill pipe 16 between the downhole location and the surface, a series of wireless modems 28 may be positioned along the drill pipe 16 and mounted to the drill pipe 16 via any suitable method, such as gauge carriers 30 to form a telemetry system 32. As shown in Figure 1, the telemetry system is provided with a first modem 28-1, a second modem 28-2, a third modem 28-3, and a fourth modem 28-4 connected to the drill pipe 16 by a first gauge carrier 30-1, a second gauge carrier 30-2, a third gauge carrier 30-3, and a fourth gauge carrier 30-4, respectively.

The downhole equipment 22 is shown to be connected to the fourth modem 28-4 positioned between the sampler 24 and tester valve 26. However, it should be understood that downhole equipment 22 may be connected to one or more of the series of modems 28. The series of modems 28 may be of various types and may be configured to communicate with each other via at least one communication channel 34 using one or more various protocols, thereby forming a communications network. For example, the series of modems 28 may be wireless modems, such as acoustic modems. Acoustic modems may be implemented as electro-mechanical devices adapted to convert one type of energy or physical attribute to another, and may also transmit and receive, thereby allowing electrical signals received from the downhole equipment 22 to be converted into acoustic signals for transmission to the surface, or for transmission to other locations of the drill pipe 16. In other embodiments, the series of modems 28 may be wired modems communicating through a wired network connection extending between the series of modems 28. In yet another embodiment, the series of modems 28 may be wireless modems which do not operate as acoustic modems.

Where implemented as acoustic modems, the series of modems 28 may be configured to transmit data between one or more of the series of modems 28, or to the surface, along an acoustic wireless network including the at least one communication channel 34. In this embodiment, the series of modems 28 act as a network of acoustic modems. The series of modems 28 may transmit signals, and the communication channel 34 may be formed, by the elastic media 14 and/or the drill pipe 16, although it should be understood that the communication channel 34 can take other forms. The signals may be created by causing vibrations within the drill pipe 16. The signals radiating from a transmitting modem of the series of modems 28 may emanate omnidirectionally from the transmitting modem along the drill pipe 16 to be received by a receiving modem of the series of modems 28 for which the signal was indented or as a next hop toward a destination modem of the series of modems 28. In addition, one or more of the series modems 28 may operate to convert acoustic tool control signals from the surface into electrical signals for operating the downhole equipment 22. In other embodiments, the communication channel 34 may be production tubing and/or casing used to convey acoustic signals, or a wired connection between the series of modems 28.

As shown, the first modem 28-1 is provided as a surface modem and may be provided as part of the well head equipment 18 or separate therefrom. The first modem 28-1 may be coupled via a connection 36 to a control system 38. The connection 36 may be a wired connection, such as a data cable, or wireless connection. The well head equipment 18, in some embodiments, may provide a connection between the drill pipe 16 and the connection 36. The control system 38 may be configured to receive data from and transmit signals to the downhole equipment 22, via the telemetry system 32, for example to provide signals for control and operation of the downhole equipment 22. In some embodiments, the control system 38 may be implemented as a computer system and the wireless connection 36 as a Wi-Fi or other wireless network through which the computer system may receive information. In this embodiment, the control system 38 may be provided with a processor (not shown), a non-transitory processor readable medium (not shown), an input (not shown), an output (not shown), and a communications device (not shown). As such, the control system 38 may be implemented as any suitable computer system such as a desktop computer, a laptop, a tablet, a smart phone, a portable digital assistant, a server, a distributed computing system, a server network, a cloud computing system, or any other suitable computer system.

In some embodiments, the telemetry system 32 may be used to provide communication between the control system 38 and one or more of the series of modems 28 and/or downhole equipment 22 coupled to one or more of the series of modems 28. In another embodiment, acoustic telemetry may be used for communication between the downhole equipment 22 in multi-zone testing. In this case, two or more zones of the well 10 are isolated by means of one or more packers 20. Certain of the downhole equipment 22 used for testing is located in each isolated zone and coupled to one or more of the series of modems 28 corresponding with the isolated zone in which the downhole equipment 22 is located. Operation of the series of modems 28 allows the downhole equipment 22 in each zone to communicate with each other as well as the downhole equipment 22 in other zones. The series of modems 28 may also allow communication from the control system 38 with control data and signals in the manner described above, which will be described in more detail below.

In general, in embodiments where the series of modems 28 are acoustic modems, acoustic signals generated by the series of modems 28 may pass along the drill pipe 16 as longitudinal and/or flexural waves. Each wave may optionally include information indicative of data received from one or more sensor, such as the downhole equipment 22, information indicative of a request for sensor data from the downhole equipment 22, control signals, and other information. The information within the waves may be compressed using encoding schemes, as discussed in more detail below. The waves may further be modulated such that the acoustic signal may have a frequency in the range between about 1-10 kHz and may be configured to pass data at a rate of between about 1 bps and about 200 bps. Data rates may be dependent on conditions such as noise levels, carrier frequencies, encoding schemes, distances between any two of the series of modems 28, and other factors.

In one embodiment, certain of the series of modems 28 may be configured as repeaters, for example the first, second, and third modems 28-1, 28-2, and 28-3. The data and/or control signals may be transmitted from the control system 38 initially to the first modem 28-1 acting as a surface modem to be repeated and thereby transmitted to the second and third modems 28-2 and 28-3 as acoustic signals. Similarly, data may be transmitted by the fourth modem 28-4 via the first, second, and third modems 28-1, 28-2, and 28-3 to the control system 38 in response to data requests, for example. As repeater modems, the first, second, and third modems 28-1, 28-2, and 28-3 are capable of receiving an acoustic signal generated in the drill pipe 16 by a preceding modem and to amplify and retransmit the signal for further propagation along the drill pipe 16, or to the control system 38 via the connection 36. The number and spacing of the series of modems 28 may depend on the particular installation selected, for example, or the distance that a signal travels. Spacing between the series of modems 28 may be around 1,000 ft. (about 304 m), but may be much more or much less in order to accommodate possible testing tool configurations.

In some embodiments, the role of the repeater modem, for example the first, second, and third modems 28-1, 28-2, and 28-3, may be to detect an incoming signal, decode the signal, interpret the signal, and subsequently relay the signal if the intended recipient of the signal is not the repeater modem. In some implementations the repeater modem may not decode the signal, but merely amplify the signal (and the noise) and retransmit the signal. In this case, the first, second, and third modems 28-1, 28-2, and 28-3 may act as simple signal boosters. In some embodiments, the repeater modems may listen continuously for any incoming signal, while in other embodiments, the repeater modems may listen intermittently.

Acoustic wireless signals, conveying commands or messages, may propagate in the transmission medium (the drill pipe 16, fluid within the well 10, or the like) in an omnidirectional fashion. The series of modems 28 may not know whether the acoustic signal is coming from another of the series of modems 28 above or below within the telemetry system 32. Each message may contain one or more network address, for example an address of a modem which initially transmitted the message, an address of a modem which last transmitted the message, an address of a modem which is the next hop in the communications channel 34, and/or an address of a destination modem which is the intended recipient of the message, for example the fourth modem 28-4 connected to the downhole equipment 22. Based on the one or more network address embedded in the message, the repeater modems may interpret the message and construct a new message with updated information with regards to the one or more network address, for example by changing the address of the next hop modem in the communication channel 34 and/or the destination address. Messages being sent from the surface may be transmitted from the first modem, 28-1, to the second modem 28-2, to the third modem 28-3, and to the fourth modem 28-4, and at least partially modified along the way to include new network addresses.

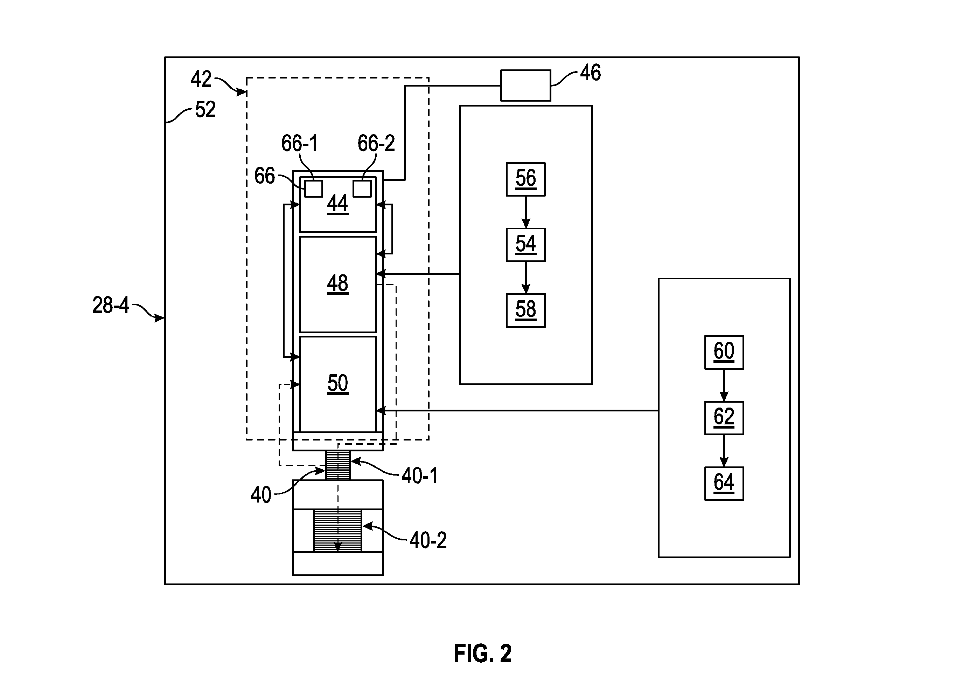

Referring to Figure 2, shown therein is a partial schematic drawing of one embodiment of one of the series of wireless modems 28. For clarity, the series of modems 28 will be described in reference to a single modem, in this case the fourth modem 28-4. The fourth modem 28-4 may include a transceiver electronics 42 coupled to the transceiver assembly 40, a non-transitory processor readable medium 44 coupled to the transceiver electronics 42, and a power supply 46 supplying power to the transceiver assembly 40, transceiver electronics 42, and the non-transitory processor readable medium 44. As shown in Figure 2, the fourth modem 28-4 may be provided with multiple transceiver assemblies 40-1 and 40-2. The transceiver electronics 42 may include transmitter electronics 48 and receiver electronics 50 configured to perform the functions of the transceiver electronics 42, which will be described in more detail below. The transceiver assembly 40 the transceiver electronics 42, the non-transitory processor readable medium 44, and the power supply 46 may be located in a single housing 52. The series of modems 28 may be of similar construction and function except as described below. For example, certain of the series of modems 28 may be coupled to one or more sensor to receive one or more sensor data stored as data samples on the non-transitory processor readable medium 44, as will be discussed in more detail below.

The transceiver assembly 40 may be a wired transceiver assembly or a wireless transceiver assembly. For example, in some embodiments the transceiver assembly 40 may be an acoustic transceiver assembly. In this embodiment, the transceiver assembly 40 may convert electrical signals to acoustic signals and vice-versa. The transceiver assembly 40 may thereby generate acoustic signals in the material of the drill pipe 16 to transmit data to another of the series of modems 28. However, it should be understood that the transceiver assembly 40 may be embodied as other forms including an electromagnetic transceiver assembly; a pressure-type transceiver assembly using technologies such as mud-pulse telemetry, pressure-pulse telemetry, or the like; or a wired transceiver assembly transmitting and receiving signals via a wired connection traveling between the series of modems 28. The transceiver assembly 40 will be described herein by way of example as an acoustic type of transceiver assembly, however, it should be understood that the transceiver assembly 40 may be implemented in other ways, while performing the same or similar functions.

The transceiver electronics 42, as described above, may include the transmitter electronics 48 and the receiver electronics 50. In general, the transceiver electronics may be adapted to vary parameters of wired or wireless signals transmitted into the communication channel 34 by the transceiver assembly 40. For example, the transceiver electronics 42 may vary the frequency, bit rate, timing, amplitude, and the like of the signals being sent into the communication channel 34. Two or more variable parameters of the signal generally define a transmission pair for the signal.

The transmitter electronics 48 may be implemented with a processing unit 54 configured to perform functions related to preparing signals for transmission by the transceiver assembly 40. In some embodiments, the transmitter electronics 48 may include an amplifier 56, such as a linear amplifier or a non-linear amplifier, to amplify a signal prepared by the processing unit 54. The fourth modem 28-4 may be coupled to one or more sensor 58 such that the transmitter electronics 48 may initially receive an output signal from the one or more sensor 58, for example from the downhole equipment 22 provided from an electrical or electro/mechanical interface. Such signals may be digital signals which may be provided to the one or more processing unit 54. The processing unit 54 may modulate the signal in one of a number of known ways, such as FM, PSK, QPSK, QAM, and the like. The resulting modulated signal may then be amplified by the amplifier 56 and transmitted to the transceiver assembly 40. In some embodiments, transmitting the modulated signal to the transceiver assembly 40 generates a wireless, e.g., acoustic, signal in the material of the drill pipe 16.

The receiver electronics 50 may be configured to receive the signal produced by and transmitted by another one of the series of modems 28. The receiver electronics 50 are capable of converting the signal, such as an acoustic signal, into an electrical signal. In one embodiment, an acoustic signal passing along the drill pipe 16 excites the transceiver assembly 40 so as to generate an electrical output signal (voltage) to be received by the receiver electronics 50. However, it is contemplated that the acoustic signal may excite an accelerometer (not shown) or an additional transceiver assembly 40 so as to generate an electrical output signal (voltage). This signal may be an analog signal carrying digital information. In this embodiment, the receiver electronics may be provided with a signal condition 60, an A/D (analog-to-digital) converter 62, and a processing unit 64. The analog signal may be applied to the signal conditioner 60, which may operate to filter/condition the analog signal to be digitized by the A/D converter 62. The A/D converter 62 provides a digitalized signal which may be applied to the processing unit 64. The processing unit 64 may be adapted to demodulate the digital signal in order to recover data provided by the one or more sensor 58 connected to another one of the series of modems 28, or provided by the surface. The type of signal processing depends on the applied modulation (i.e. FM, PSK, QPSK, QAM, and the like).

The processing units 54 and 64 may be implemented a single processor or multiple processors working together or independently to execute processor executable instructions, described in more detail below. Embodiments of the processing units 54 and 64 may include one or more micro-controllers, digital signal processors, central processing units, application specific integrated circuits, microprocessors, multi-core processors, or the like. In some embodiments, the processing units 54 and 64 may be contained within one or more computer, network device, manufacturing tool, or the like, or any device with a set of one or more processors, or multiple devices having one or more processors that work together.

The non-transitory processor readable medium 44 may be implemented as RAM, ROM, flash memory, or the like, and may take the form of a magnetic device, optical device, or the like. The non-transitory processor readable medium 44 may be a single non-transitory processor readable medium or multiple non-transitory processor readable media functioning logically together or independently. The non-transitory processor readable medium 44 may be coupled to and configured to communicate the transceiver electronics 42, or the processing units 54 and 64 within the transceiver electronics 42, via one or more path such as a data bus, for example. The non-transitory processor readable medium 44 may store a plurality of unique identifiers, a set of predetermined communications parameters, and processor executable instructions 66, as will be described below in more detail, and may also store data structures, such as a database, for example. The data structures on the non-transitory processor readable medium 44 may store data such as sensor data from the one or more sensor 58 indicative of one or more measurement of a downhole environment, or a parameter within the downhole environment, to which the one or more sensor 58 may be exposed.

The power supply 46 may be configured to supply power to the transceiver assembly 40; the transceiver electronics 42, including the transmitter electronics 48 and the receiver electronics 50; and the non-transitory processor readable medium 44. The power supply 46 may be implemented as one or more battery, such as a lithium battery, for example. It should be understood that the power supply 46 may be implemented as any suitable battery capable of powering the transceiver assembly 40, the transceiver electronics 42, and the non-transitory processor readable medium 44.

The processor executable instructions 66 may be configured to be read and/or executed by the processing unit 54 and/or 64. The processor executable instructions 66 may include communication path verification instructions 66-1, and other processor executable instructions 66-2. The communication path verification instructions 66-1 will be explained below in more detail. The other processor executable instructions 66-2 may include firmware, an operating system, encoding instructions, decoding instructions, network discovery algorithms, path optimization algorithms, and other processor executable instructions. The processor executable instructions 66 may be written in any suitable programming language, such as C++, C#, Java, Python, Basic, or any other high-level or low-level programming languages, for example.

Where the non-transitory processor readable medium 44 includes network discovery algorithms and/or path optimization algorithms and the processing units 64 and/or 64 execute those instructions, the series of modems 28 may discover the identity, position, and/or relative order of other modems of the series of modems 28 which are capable of communicating with each other via the communication channel 34 with the network discovery algorithm, and/or to select particular ones of the series of modems 28 to communicate with using the path optimization algorithm. The network discovery algorithm and/or the path optimization algorithm can be stored as one or more files, one or more sections of instructions, in one or more database as separate or same records, or in any other suitable manner accessible by the processing unit(s) 54 and/or 64. An example of the network discovery and path optimization algorithms suitable for execution by the processing units 54 and/or 64 to determine aspects of the network and the series of modems 28 is found in U.S. Pat. Pub. No. 2012/0249338, the disclosure of which is hereby incorporated by reference.

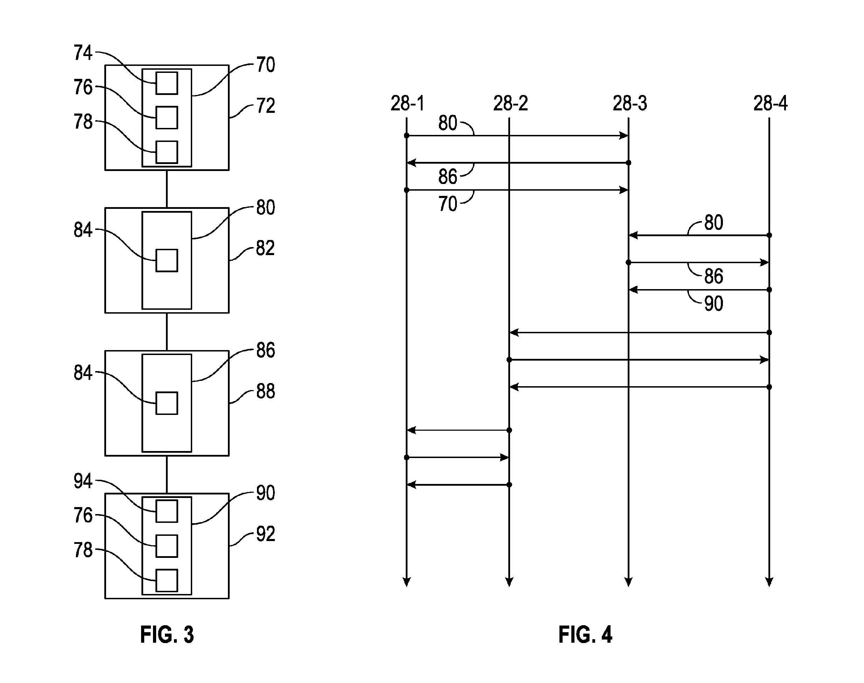

Referring now to Figures 3 and 4, shown therein is a diagrammatic representation of one embodiment of the communication path verification instructions 66-1 stored in the non-transitory processor readable medium 44. In use, the processing unit 54, executing the processor executable instructions for the communication path verification instructions 66-1, may receive a first communications message 70, as indicated by block 72. The first communications message 70 may include a first unique identifier 74, a second unique identifier 76, and a payload 78. The processing unit 54 may then transmit a test message 80, as indicated by block 82. The test message 80 may include a predetermined set of communications parameters 84. The processing unit 54 may then receive an acknowledgement message 86 with the predetermined set of communications parameters 84, as indicated by block 88. The processing unit 54 may then transmit a second communications message 90, as indicated by block 92. The second communications message 90 may include the second unique identifier 76 and the payload 78. The second communications message 90 may be generated by replacing the first unique identifier 74 with a third unique identifier 94.

The first communications message 70 may be a control signal, a data request, or any other message. In some embodiments, the first unique identifier 74 may be indicative of an intermediate point along a communications path prior to the intended recipient of the first communications message 70. The second unique identifier 76 may be indicative of an intended destination of the first communications message 70. For example, as shown in Figure 4, the first communications message 70 may be transmitted by the first modem 28-1 to the third modem 28-3. In this embodiment, the intended recipient is the fourth modem 28-4. As such, the first unique identifier 74 may be a network address of an intermediate point, in this case the third modem 28-3, on a path toward the fourth modem 28-4. The second unique identifier 76 may be a network address, similar to the first unique identifier 74 and be indicative of the intended recipient, in this case the fourth modem 28-4. In some embodiments, where the intermediate point and the destination coincide, the first and second unique identifiers 74 and 76 may share the same network address and be indicative of the same modem of the series of modems 28. For example, the third modem 28-3 may generate the second communications message 90 and transmit the second communications message 90 to the fourth modem 28-4. In this case, the third unique identifier 94 and the second unique identifier 76 are the network address of the fourth modem 28-4. From the perspective of the fourth modem 28-4, the message from the third modem 28-3 acts as the first communication message 70 in which the first unique identifier 74 and the second unique identifier 76 are both indicative of the fourth modem 28-4. The payload 78 may be a control signal, a data request, or any other suitable message. For example, in some embodiments, the payload 78 may be a query requesting one or more sensor data from one or more sensor coupled to a modem of the series of modems 28. In some embodiments, the payload 78 of the second communications message 90 may be identical to the payload 78 of the first communications message 70.

The predetermined set of communications parameters 84, used in the test message 80 and the acknowledgement message 86, may be one of a plurality of predetermined sets of communications parameters 96. The predetermined set of communications parameters 84 may be intrinsically included in the signal processing. In some embodiments, a plurality of communications parameters including a plurality of frequencies and a plurality of bit rates may be stored in the non-transitory processor readable medium 44. The plurality of frequencies and the plurality of bit rates may be associated as combinations of a frequency and a bit rate, for example in a relational database, forming a transmission pair. A set of communications parameters may be formed by the transmission pair, e.g., the combination of a selected frequency and a selected bit rate. For example, where the series of modems 28 are acoustic modems, the transmission pair may be formed from a selected acoustic signal frequency and a selected acoustic signal bit rate. The plurality of frequencies and the plurality of bit rates may be associated in the non-transitory processor readable medium 44 such that each possible set of communications parameters, frequency and bit rate combinations, may be predetermined and stored within the non-transitory processor readable medium 44. In some embodiments, where the series of modems 28 are implemented as acoustic modems, the frequency and the bit rate of the transmission pairs may be an acoustic signal frequency and an acoustic signal bit rate.

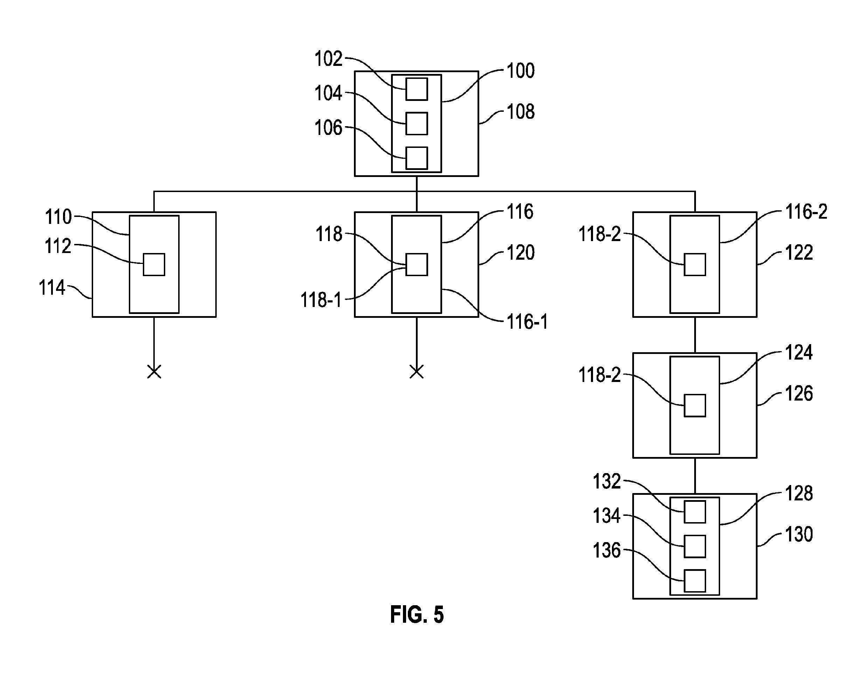

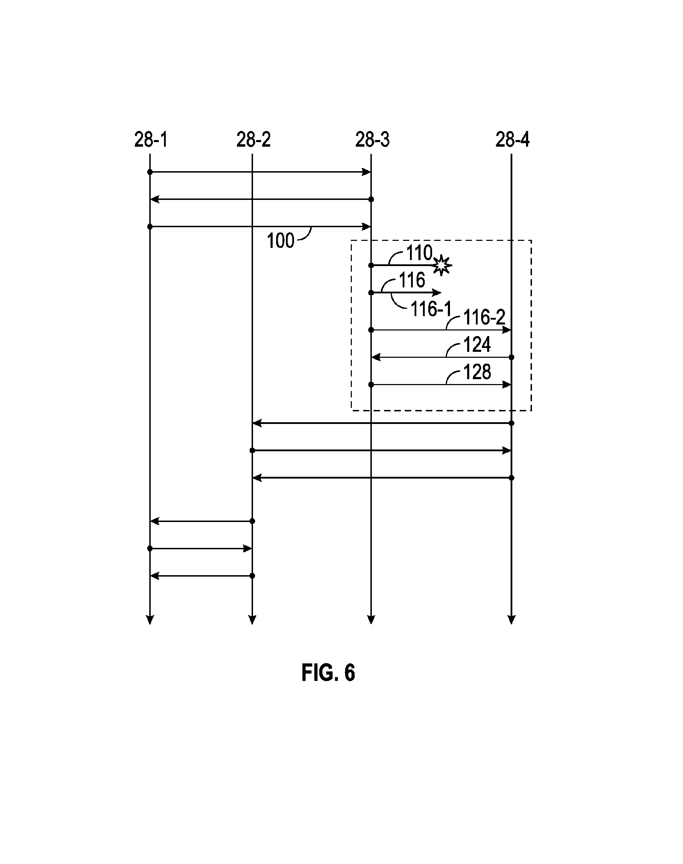

Referring now to Figures 5 and 6, therein shown is a diagrammatic representation of another embodiment of the communication path verification instructions 66-1 stored in the non-transitory processor readable medium 44. In this embodiment, the telemetry system 32 may experience expected or unexpected noise causing communication between the third and fourth modems 28-3 and 28-4 to be unstable. As shown, in use, the processing unit 54 may receive a first communications message 100 having a first unique identifier 102, a second unique identifier 104, and a payload 106, as indicated by block 108. The first unique identifier 102, similar to the first unique identifier 74 may be a network address of an intermediate point along the communications path. The second unique identifier 104, similar to the second unique identifier 76 may be a network address of an intended recipient of the first communications message 100. The payload 106, similar to the payload 78, may be the content of the first communications message 100. The processing unit 54 may then transmit a test message 110 with a first predetermined set of communication parameters 112, as indicated by block 114. The test message 110 may be transmitted to a next hop modem of the series of modems 28 toward the intended recipient of the first communications message 100. In some embodiments, the next hop modem may be a predetermined acoustic modem.

Where the processing unit 54 does not receive an acknowledgement message within a predetermined period of time, the processing unit 54 may execute network discovery logic and may transmit one or more subsequent test message 116 with one or more distinctive communication parameters 118. As shown in Figure 5, as indicated by block 120, the processing unit 54 may transmit a first subsequent test message 116-1 with a first distinctive communication parameters 118-1. If no acknowledgement signal is received within the predetermined period of time, the processing unit 54 may then transmit a second subsequent test message 116-2 with a second distinctive communication parameters 118-2, as indicated in block 122. When the processing unit 54 receives an acknowledgement message 124 with the distinctive communication parameters 118 used to transmit the test message to which the acknowledgement message 124 is responding, as indicated by block 126, the processing unit 54 may transmit a second communications message 128 with the communication parameter 118 and then store the communications parameter 118 for future communication with the next hop modem 28, as indicated by block 130.

The second communications message 128 may include a third unique identifier 132, a fourth unique identifier 134, and a payload 136. In some embodiments, the processing unit 54 may replace the second unique identifier 104 with the third unique identifier 132 generate the second communications message 128 and indicate a next intermediate point or next hop along the communications path to the intended recipient modem of the series of modems 28. In some embodiments, the fourth unique identifier 134 may be indicative of the same network address as the second unique identifier 104. In other embodiments, the fourth unique identifier 134 may be indicative of a network address of a modem of the series of modems 28 other than the modem indicated by be second unique identifier 104. For example, where the fourth modem 28-4 receives a communications message indicative of a query requesting one or more sensor data from one or more sensor coupled to the fourth modem 28-4, the first and second unique identifiers 102 and 104 may both indicate the network address of the fourth modem 28-4 and a query may be included in the communications message. In this example, the fourth modem 28-4 serves as an end point for a communication path between the first modem 28-1 and the fourth modem 28-4. As shown in Figure 6, when the fourth modem 28-4 generates a response, transmitted via the second communications message 128, the third unique identifier 132 may be the network address of the second modem 28-2 and the fourth unique identifier 134 may be the network address of the first modem 28-1. The payload 136 may include the one or more sensor data requested by the first modem 28-1 using the first communications message 100.

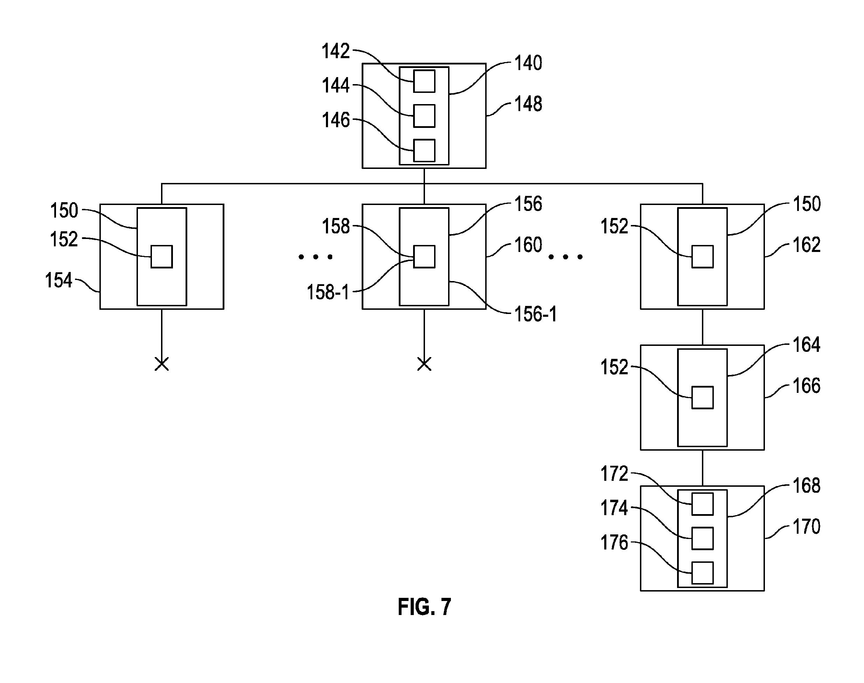

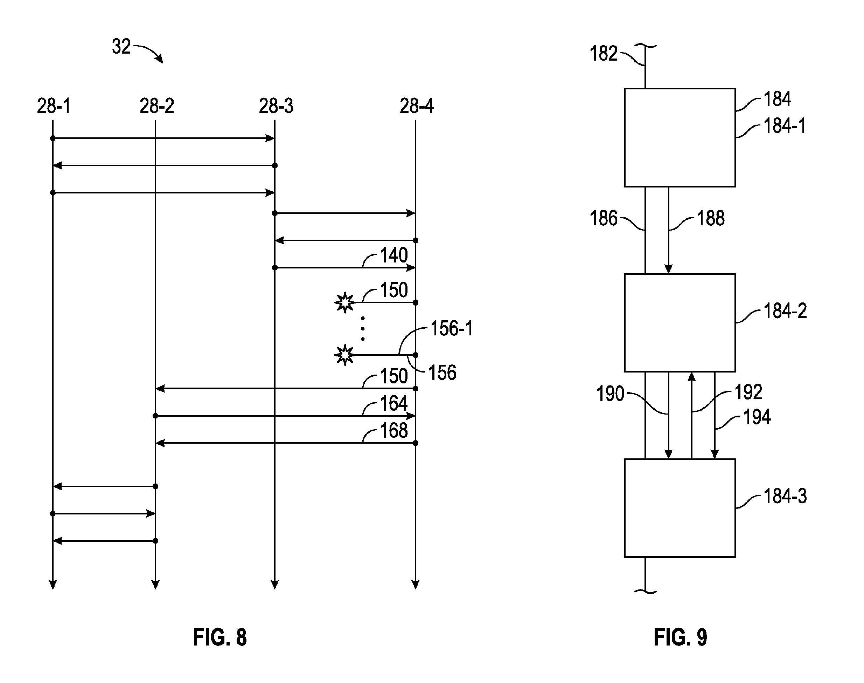

Referring now to Figures 7 and 8, therein shown is a diagrammatic representation of another embodiment of the communication path verification instructions 66-1 stored in the non-transitory processor medium 44. In this embodiment, the telemetry system 32 may experience expected or unexpected noise causing communication between the third and fourth modems 28-3 and 28-4 to be unstable. As shown, in use, the processing unit 54 may receive a first communication message 140 having a first unique identifier 142, a second unique identifier 144, and a payload 146, as indicated by block 148. The first unique identifier 142, similar to the first unique identifier 74 or 102 may be a network address of an intermediate point along the communications path. The second unique identifier 144, similar to the second unique identifier 76 or 104 may be a network address of an intended recipient of the first communications message 140. The payload 146, similar to the payload 78 or 106, may be the content of the first communications message 140. The processing unit 54 may then transmit a test message 150 with a first predetermined set of communication parameters 152, as indicated by block 154. In this case, the fourth modem 28-4 initially transmits the test message 150 to the third modem 28-3. The test message 150 may be transmitted to a next hop modem of the series of modems 28, in this case the third modem 28-4, toward the intended recipient, in this case also the first modem 28-1, of the first communications message 140.

Where the processing unit 54 does not receive an acknowledgement message within a predetermined period of time, the processing unit 54 may transmit one or more subsequent test message 156 with one or more distinctive communication parameters 158 to the same modem, in this case the third modem 28-3, as indicated by block 160. The processing unit 54 may transmit a first subsequent test message 156-1 with a first distinctive communication parameters 158-1. If no acknowledgement signal is received, the processing unit 54 may then transmit additional subsequent test messages 156 with distinctive communication parameters 158, similar to the process discussed with regards to Figures 5 and 6.

If the processing unit 54 does not receive the acknowledgement message prior to transmitting one of the subsequent test messages 156 for each of the distinctive communications parameters 158 of the plurality of sets of communications parameters 96, the processing unit 54 may repeat the functions of the communication path verification instructions 66-1 transmitting test messages to a different modem within the series of modems 28. For example, when the fourth modem 28-4 fails to receive the acknowledgement signal from the third modem 28-3, the fourth modem 28-4 may attempt to establish or verify a communications channel with the second modem 28-2, as shown in Figure 8. In this embodiment, the processing unit 54 transmits the test message 150 to the second modem 28-2 with the first predetermined set of communications parameters 152, as indicated in block 162.

When the processing unit 54 receives an acknowledgement message 164 with the first predetermined set of communication parameters 152 used to transmit the test message 150 to which the acknowledgement message 164 is responding, as indicated by block 166, the processing unit 54 may transmit a second communications message 168, as indicated by block 170.

The second communications message 168 may include a third unique identifier 172, a fourth unique identifier 174, and a payload 176. In some embodiments, the processing unit 54 may replace the first unique identifier 142 with the third unique identifier 172 to generate the second communications message 168 and indicate a next intermediate point or next hop along the communications path to the intended recipient modem of the series of modems 28. In some embodiments, the fourth unique identifier 174 may be indicative of the same network address as the second unique identifier 144. In other embodiments, the fourth unique identifier 174 may be indicative of a network address of a modem of the series of modems 28 other than the modem indicated by be second unique identifier 144. For example, where the fourth modem 28-4 receives the first communications message 140 indicative of a query requesting one or more sensor data from one or more sensor coupled to the fourth modem 28-4, the first and second unique identifiers 142 and 144 may both indicate the network address of the fourth modem 28-4 and the payload 146 may include the query. As shown in Figure 6, when the fourth modem 28-4 generates a response, transmitted via the second communications message 168, the third unique identifier 172 may be the network address of the second modem 28-2 and the fourth unique identifier 174 may be the network address of the first modem 28-1. The payload 176 may include the one or more sensor data requested by the first modem 28-1 using the first communications message 140.

Referring now to Figure 9, shown therein is a communications network 180. The communications network 180 includes a communications channel 182 and a plurality of modems 184. The plurality of modems 184 are capable of and configured to perform the functions of the communication path verification instructions 66-1 described above. The communications network 180 will be described in reference to acoustic modems, however it should be understood that the communications network 180 may be implemented as a wired network where the communications channel 182 is a wired connection extending between the plurality of modems 184. In other embodiments, the communications network 180 may be implemented as a wireless network where the plurality of modems 184 do not transmit signals via vibrations in a drill string. In one embodiment, the communications channel 182 is a drill string 186 and the plurality of modems 184 are a plurality of acoustic modems coupled to the drill string 186 and configured to transmit acoustic signals along the drill string 186. In this embodiment, the plurality of modems 184 includes a first acoustic modem 184-1, a second acoustic modem 184-2, and a third acoustic modem 184-3. The first modem 184-1 is capable of transmitting a first communications message 188 via the drill string 186, similar to the first communications message 70 or 100. The second acoustic modem 184-2 is capable of receiving the first communications message 188; transmitting a test message 190, similar to the test message 80, 110, or 116; receiving an acknowledgement message 192, similar to the acknowledgement message 86 or 124; and transmitting a second communications message 194, similar to the second communications message 90 or 128. The third acoustic modem 184-3 is capable of receiving the test message 190, transmitting the acknowledgement message 192, and receiving the second communications message 194.

Although the preceding description has been described herein with reference to particular means, materials and embodiments, it is not intended to be limited to the particulars disclosed herein; rather, it extends to functionally equivalent structures, methods, and uses, such as are within the scope of the appended claims.

## Claims

1. An acoustic modem for communication in a network of acoustic modems via a drill string, the acoustic modem comprising:
an acoustic transceiver assembly;
transceiver electronics coupled to the acoustic transceiver assembly, comprising:
transmitter electronics coupled to the acoustic transceiver assembly and configured to cause the acoustic transceiver assembly to send acoustic signals into the drill string;
receiver electronics coupled to the acoustic transceiver assembly and configured to decode acoustic signals received by the acoustic transceiver assembly;
at least one processing unit coupled to the transmitter electronics and the receiver electronics, the at least one processing unit configured to execute processor executable instructions;
a non-transitory processor readable medium coupled to the at least one processing unit, the non-transitory processor readable medium storing a set of previously agreed communications parameters to transmit and receive signals and processor executable instructions to (1) enable the receiver electronics to receive a first communications message, (2) enable the transmitter electronics to transmit a test message with the set of communications parameters to a predetermined acoustic modem, (3) enable the receiver electronics to receive an acknowledgement message with the set of communications parameters from the predetermined acoustic modem, and (4) enable the transmitter electronics to transmit a second communications message responsive to receiving the acknowledgement message; and
a power supply supplying power to the transceiver assembly, the processor, and the non-transitory processor readable medium.

2. The acoustic modem of claim 1, wherein the acoustic modem is a first acoustic modem identified by a first unique identifier in the first communications message, and wherein the first communications message includes a second unique identifier indicative of an intended recipient of the first communications message, the intended recipient being a second acoustic modem.

3. The acoustic modem of claim 1, wherein the processing unit generates the second communication message by replacing a first unique identifier of the first communications message with a third unique identifier.

4. The acoustic modem of claim 1, wherein the acoustic modem is a first acoustic modem, and wherein a payload of the first communications message is a query requesting one or more sensor data from one or more sensor coupled to a second acoustic modem indicated by a second unique identifier.

5. The acoustic modem of claim 4, wherein the payload of the second communications message comprises the one or more sensor data requested by the query.

6. The acoustic modem of claim 1, wherein the first communications message has a first unique identifier indicative of an intermediate point along a communications path and a second unique identifier indicative of an end point of a communications path and where the first unique identifier is indicative of the acoustic modem indicated by the second unique identifier and wherein the processor executable instructions include logic to process a command within the first communications message.

7. The acoustic modem of claim 1, wherein the processor executable instructions includes network discovery logic which is executed in response to the acknowledgement message not being received within a predetermined period of time and wherein the set of communications parameters is a first set of communications parameters of a plurality of predetermined sets of communications parameters and wherein the network discovery logic of the processor executable instructions directs the transmitter electronics to transmit a series of one or more subsequent test message with a series of one or more distinctive communication parameters selected from the plurality of predetermined sets of communications parameters until the receiver electronics receive the acknowledgement message.

8. A communications network for communicating information in a downhole environment, comprising:
a drill string; and
a plurality of acoustic modems coupled to the drill string and configured to transmit acoustic signals along the drill string, the plurality of acoustic modems comprising:
a first acoustic modem transmitting a first communications message via the drill string, the first communications message including a first unique identifier, a second unique identifier, and a payload;
a second acoustic modem receiving the first communications message, transmitting a test message with a set of communications parameters, receiving an acknowledgement message with the set of communications parameters, and transmitting a second communications message having the second unique identifier and the payload; and
a third acoustic modem receiving the test message, transmitting the acknowledgement message, and receiving the second communications message.

9. The communications network of claim 8, wherein the second unique identifier is indicative of an intended recipient of the first communications message, and wherein the intended recipient is the third acoustic modem.

10. The communications network of claim 8, wherein the first unique identifier is indicative of the second acoustic modem and the second acoustic modem is in a communications path between the first acoustic modem and the third acoustic modem.

11. The communications network of claim 8, wherein the second acoustic modem replaces the first unique identifier within the first communications message with a third unique identifier indicative of the third acoustic modem to generate the second communications message.

12. The communications network of claim 8, wherein the set of communications parameters are defined by a transmission pair having a selected acoustic signal frequency and a selected acoustic signal bit rate.

13. A method, comprising:
receiving, by an acoustic modem, a first communications message;
transmitting, by the acoustic modem, a test message with a first set of communication parameters of a plurality of sets of previously agreed communications parameters;
transmitting, by the acoustic modem, a series of one or more subsequent test messages with a series of one or more distinctive communications parameters, if the acoustic modem does not receive an acknowledgement message within a predetermined time period;
receiving, by the acoustic modem, the acknowledgement message with a second set of communications parameters associated with the test message to which the acknowledgement message is responding; and
transmitting, by the acoustic modem, a second communications message with the second set of communications parameters responsive to receiving the acknowledgement message.

14. The method of claim 13, wherein transmitting the second communications message further comprises replacing, by the acoustic modem, a first unique identifier of the first communications message with a third unique identifier to generate the second communications message.

15. The method of claim 13, wherein the first and second sets of communications parameters are defined by transmission pairs having a selected acoustic signal frequency and a selected acoustic signal bit rate.
